# EUROPEAN PATENT APPLICATION

(11) **EP 1 128 577 A1**
(43) Date of publication of application: **29.08.2001**
(21) Application number: 00948269.6
(22) Date of filing: 28.07.2000
(51) Int. Cl.: H04B 7/26

(54) **RADIO COMMUNICATION DEVICE AND RADIO COMMUNICATION METHOD**

(30) Priority: 30.07.1999 JP 21631499
(71) Applicant: MATSUSHITA ELECTRIC INDUSTRIAL CO., LTD., Kadoma-shi, Osaka 571-8501 (JP)
(72) Inventor: SHOJI, Takahiro, Yokohama-shi, Kanagawa 222-0002 (JP); UE, Toyoki, Yokosuka-shi, Kanagawa 238-0022 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0005048
(87) International publication number: WO0110061

(57) **Abstract**

Transmit power determination section 105 determines a transmit power value in a communication between the own stations that will not interfere with communications between other stations based on the transmit power value in the communications between the other stations, SIR measurement section 108 measures an SIR of a known reference signal in the reception signal and transmission rate determination section 109 determines a transmission rate value that will meet the desired communication quality according to the determined transmit power value and measured SIR value.

## Description

### Technical Field

The present invention relates to an apparatus and method for radio communications.

### Background Art

In a conventional mobile radio communication system, transmit power of a signal is controlled according to signal power loss in a radio propagation path (hereinafter referred to as "propagation path loss") and according to a data transmission rate. That is, as the radio propagation path environment becomes worse and propagation path loss increases, the transmitting side sends signals with increased transmit power to meet the desired communication quality on the receiving side. Furthermore, since a data error rate on the receiving side increases as the transmission rate increases, the transmitting side sends signals with transmit power increased as the transmission rate increases so that the data error rate falls within a certain range.

However, in the conventional transmit power control described above, when a propagation path environment between a mobile station and a base station (hereinafter referred to as "between the own stations") deteriorates due to shadowing, etc., and the transmitting side increases transmit power, the communication quality between the own stations is satisfied, but the communication between the own stations may constitute interference with a communication between other mobile station and the base station in the same cell and between other mobile station and a base station in another cell (hereinafter collectively referred to as "between other stations"), deteriorating the communication quality between other stations. In this case, between other stations, the transmitting side increases transmit power to maintain the communication quality. However, this constitutes interference between the own stations, and therefore the transmitting side further increases transmit power between the own stations. Continuing such transmit power control between each mobile station and base station will produce a problem that the communication quality for the entire system will not show even the slightest improvement and the channel utilization efficiency in the entire system will also deteriorate.

Moreover, when a mobile station demands a communication at high transmission rate, the transmitting side sends data with increased transmit power. Therefore this communication at the increased transmission rate constitutes interference with a communication between other stations and deteriorates the communication quality between the other stations producing the same problem described above. In this case, the problem above may be solved by prohibiting the mobile station demanding for a communication at an increased transmission rate from continuing the communication itself, but prohibiting the communication itself is not a desirable means for solving the problem in providing a communication service.

### Disclosure of Invention

It is an object of the present invention to provide a radio communication apparatus and a radio communication method that carries out a radio communication at a transmission rate that meets a desired communication quality according to propagation path loss taking into account the channel capacity of an entire service area.

The inventor et al. of the present invention focused attention on the fact that the above problem occurs because transmit power control is performed between each mobile station and base station independently without taking into account interference with communications between other stations or the channel utilization efficiency of the entire system and the transmission rate is determined according to a demand from each mobile station without taking into account a communication environment of each mobile station.

To attain the above object, the present invention therefore determines a transmit power value in a communication between the own stations that will not constitute interference with communications between other stations based on transmit power values in the communications between the other communications and performs the communication between the own stations with a transmission rate value based on the determined transmit power value capable of achieving sufficient communication quality.

### Brief Description of Drawings

FIG.1 is a main block diagram showing an outlined configuration of a base station apparatus according to an embodiment of the present invention;
FIG.2 is a main block diagram showing an outlined configuration of a mobile station apparatus according to the embodiment of the present invention;
FIG.3 is a transmission rate determination table of the base station apparatus of the embodiment of the present invention; and
FIG.4 is a sequence diagram to explain the operations of the mobile station apparatus and base station apparatus according to the embodiment of the present invention.

### Best Mode for Carrying out the Invention

With reference now to the attached drawings, an embodiment of the present invention will be explained in detail below. In the following explanations, a mobile communication base station apparatus (hereinafter referred to as "base station apparatus") and a mobile communication terminal apparatus (hereinafter referred to as "mobile station apparatus") will be explained as the radio communication apparatuses.

### (Embodiment)

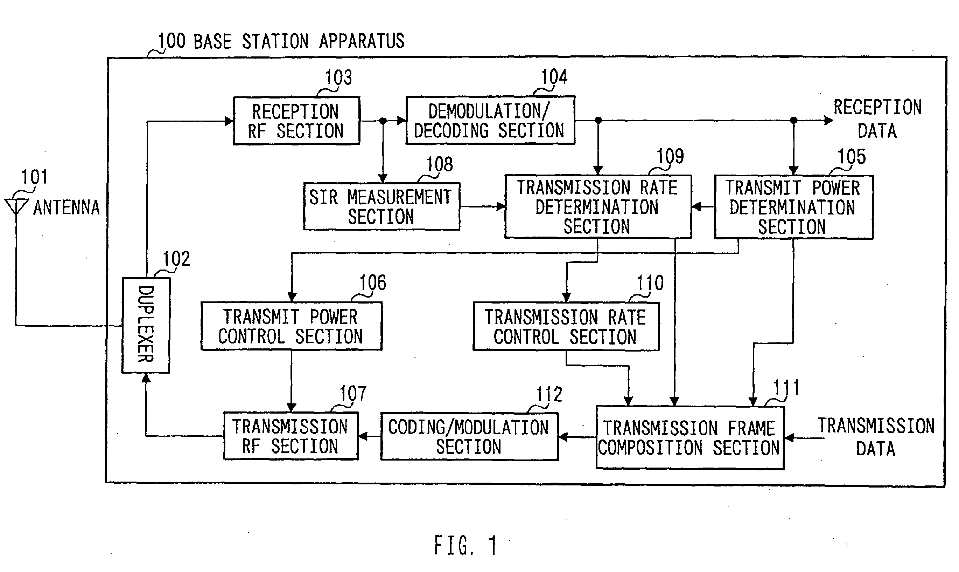

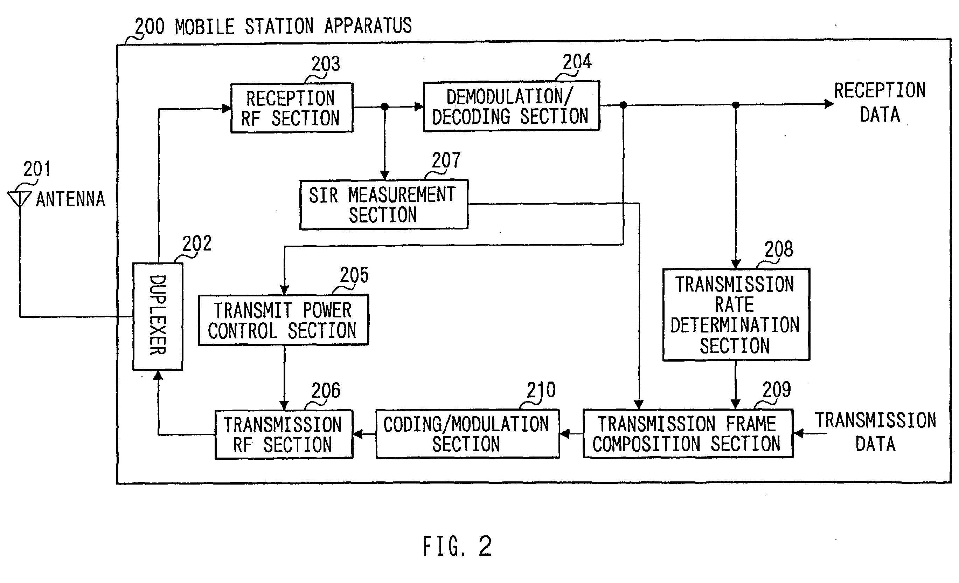

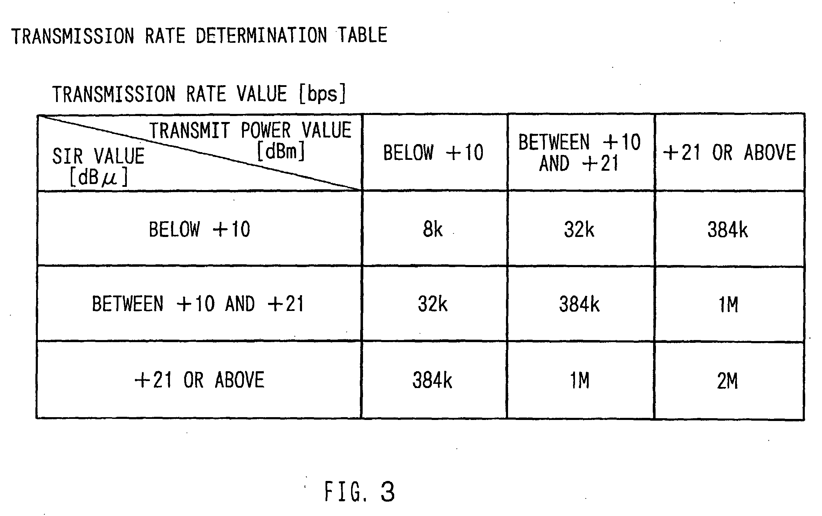

FIG.1 is a main block diagram showing an outlined configuration of a base station apparatus according to an embodiment of the present invention, FIG.2 is a main block diagram showing an outlined configuration of a mobile station apparatus according to the embodiment of the present invention and FIG.3 is a transmission rate determination table of the base station apparatus of the embodiment of the present invention.

In base station apparatus 100 in FIG.1, duplexer 102 performs switching control to carry out transmission and reception through a single antenna 101. Reception RF section 103 amplifies a reception signal and then converts the frequency of the reception signal to an intermediate frequency or baseband frequency. Demodulation/decoding section 104 demodulates/decodes the reception signal converted to the intermediate frequency or baseband frequency to obtain reception data.

When the mobile station apparatus sends a call connection request to base station apparatus 100, transmit power determination section 105 determines a transmit power value in such a way as not to constitute interference with communications between other stations.

For example, transmit power determination section 105 determines a transmit power value that will not constitute interference with communications between other stations based on the transmit power value of the communication currently being carried out between base station apparatus 100 and all mobile station apparatuses . More specifically, transmit power determination section 105 prevents interference with communications between other stations by controlling each transmit power value of a communication with each mobile station apparatus in the same cell to a certain value or below and controlling the sum total of uplink transmit power values in the same cell and the sum total of downlink transmit power values in the same cell to a certain value or below.

Furthermore, it is also possible to determine a transmit power value using the following method for instance. That is, in response to a call connection request from the mobile station apparatus, the base station apparatus sends a predetermined transmit power value and a predetermined transmission rate value to the mobile station apparatus as control information first. In response to this, the mobile station apparatus sends a known reference signal, etc. to the base station apparatus with a transmit power value and transmission rate value based on the control information. After the control information is sent until the known reference signal, etc. is received, the base station apparatus measures interference power values and SIR values in communications between other stations and thereby estimates the extent of interference with the communications between the other stations caused by the known reference signal, etc. sent from the mobile station apparatus. Then, when the base station apparatus estimates that the known reference signal, etc. sent from the mobile station apparatus will cause considerable interference with the communications between the other stations to an extent that the desired communication quality will no longer be satisfied, the base station apparatus reduces the transmit power value, and when it is possible to estimate that the amount of interference is small, the base station apparatus increases the transmit power value and resends the transmit power value to the mobile station apparatus as the control information. Thus, the base station apparatus and mobile station apparatus repeat communications a plurality of times while maintaining a certain transmission rate and changing a transmit power value, and in this way a maximum transmit power value that will not interfere with communication between other stations is determined.

The method of determining a transmit power value is not limited to these methods, but can be any method that can at least determine a transmit power value that will not interfere with communication between other stations.

Transmit power control section 106 performs transmit power control on transmission RF section 107 according to the transmit power value determined by transmit power determination section 105.

Transmission RF section 107 amplifies the modulated data up to the transmit power value controlled by transmit power control section 106 and sends the modulated data via duplexer 102 and antenna 101.

SIR measurement section 108 measures a signal to interference ratio (hereinafter referred to as "SIR") of the known reference signal in the reception signal.

Transmission rate determination section 109 determines a transmission rate value from the transmit power value determined by transmit power determination section 105, the SIR value of the uplink channel measured by SIR measurement section 108 and the SIR value of the downlink channel notified to base station apparatus 100 by the mobile station apparatus.

More specifically, transmission rate determination section 109 has a transmission rate determination table as shown in FIG.3, which is a table that shows the correspondence between transmit power values, SIR values and transmission rate values and determines a transmission rate value that corresponds to a transmit power value and SIR value with reference to this table. As shown in FIG.3, the transmission rate determination table is preset to meet the desired communication quality in such a way that the transmission rate value decreases as the transmit power value decreases, and the transmission rate value decreases as the SIR value decreases. That is, the base station apparatus and mobile station apparatus can communicate at a higher transmission rate as the transmit power value and SIR value increase and can communicate only at a lower transmission rate as the transmit power value and SIR value decrease. Now, suppose the transmit power value is 15 [dBm] and SIR value is 15 [dB *µ*], then the transmission rate value is determined as 384 [kbps] from the transmission rate determination table. Thus, use of the transmission rate determination table allows a transmission rate value to be determined simply and quickly.

Here, the numbers shown in FIG.3 are used for the sake of convenience to illustrate a relationship between values large and small and are not intended to indicate actual determined values or measured values. Moreover, the specific correspondence between the transmit power values, SIR values and transmission rate values is predetermined optimally so as to meet the desired quality according to results of a simulation or field test, etc. Here, an optimal transmission rate value is determined using a table, but the method of determining an optimal transmission rate value is not limited to this method, and can be any method that can at least determine an optimal transmission rate value.

Here, a transmission rate value is determined based on not only a transmit power value but also SIR value because it is necessary to take into account propagation path loss, etc. in addition to a transmit power value in determining a transmission rate value. That is, even if data is sent with a same transmit power value, the reception power value on the receiving side decreases as propagation path loss increases, and in effect this would be not different from the case where the transmit power value is small. Therefore, an SIR value is also used as an index of propagation path loss to determine the transmission rate value, and the transmission rate value is decreased as the SIR value decreases, whereby the desired communication quality is satisfied.

Furthermore, the transmission rate value is determined using both an SIR value of the uplink channel and an SIR value of the downlink channel because this embodiment takes into account the case where the base station apparatus of this embodiment is applied to a radio communication system using an FDD (Frequency Division Duplex) system. That is, because in the case of the FDD system, the uplink channel and downlink channel use different frequency bands and have different propagation path characteristics, and therefore it is necessary to take into account propagation path loss, etc. on both channels. Therefore, when the base station apparatus of this embodiment is applied to a TDD (Time Division Duplex) system in which a same frequency band is used for the uplink channel and downlink channel, the uplink channel and downlink channel will have a same propagation path characteristic, and therefore using the SIR value of either the uplink channel or downlink channel suffices.

Transmission rate control section 110 controls the transmission rate of transmission frame composition section 111 according to the transmission rate value determined by transmission rate determination section 109.

Transmission frame composition section 111 superimposes the transmit power value determined by transmit power determination section 105 and the transmission rate value determined by transmission rate determination section 109 over control data sent via a control channel and thereby composes a transmission frame. Furthermore, transmission frame composition section 111 composes user data sent via a communication channel into a transmission frame sent at a transmission rate controlled by transmission rate control section 110. Coding/modulation section 112 encodes/modulates the frame-composed transmission data.

On the other hand, in mobile station apparatus 200 in FIG.2, duplexer 202 performs switching control to carry out transmission and reception through a single antenna 201. Reception RF section 203 amplifies a reception signal and then converts the frequency of the reception signal to an intermediate frequency or baseband frequency. Demodulation/decoding section 204 demodulates/decodes the reception signal converted to the intermediate frequency or baseband frequency to obtain reception data.

Transmit power control section 205 detects a transmit power value superimposed over the control data sent from base station apparatus 100 and performs transmit power control on transmission RF section 206 according to the transmit power value.

Transmission RF section 206 amplifies the modulated data up to the transmit power value controlled by transmit power control section 205 and sends the modulated data via duplexer 202 and antenna 201.

SIR measurement section 207 measures an SIR of the known reference signal in the reception signal. Transmission rate control section 110 detects a transmission rate value superimposed over the control data sent from base station apparatus 100 and controls the transmission rate of transmission frame composition section 209 according to the transmission rate value.

Transmission frame composition section 209 superimposes the SIR value measured by SIR measurement section 207 over the control data and thereby composes a transmission frame. Furthermore, transmission frame composition section 209 composes user data into a transmission frame at a transmission rate controlled by transmission rate control section 208. Coding/modulation section 210 encodes/modulates the frame-composed transmission data.

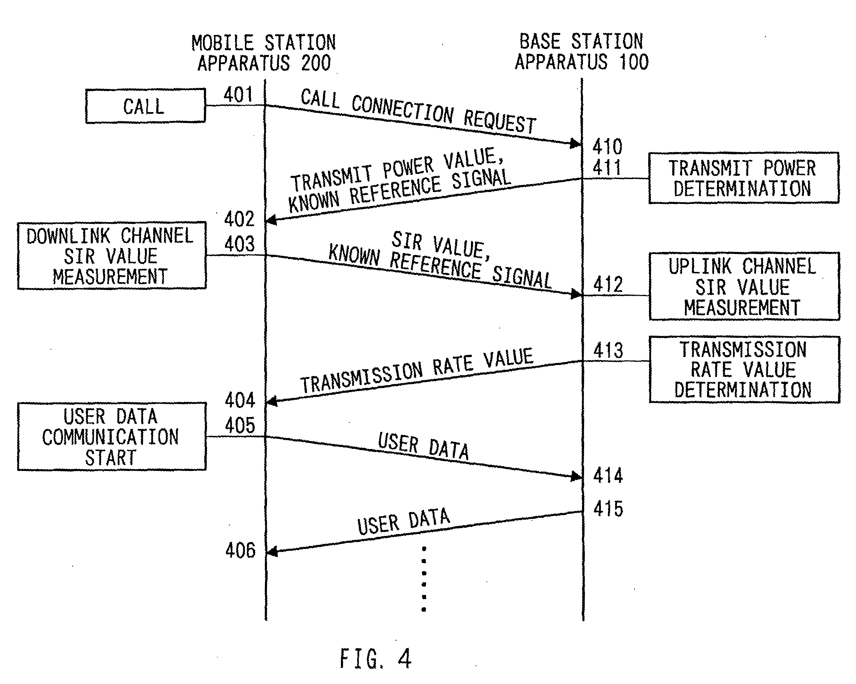

Then, the operations of the mobile station apparatus and base station apparatus in the above configurations will be explained using FIG.4. FIG.4 is a sequence diagram to explain the operations of the mobile station apparatus and base station apparatus according to the embodiment of the present invention.

First, at timing 401, mobile station apparatus 200 starts a call and sends a call connection request signal via a control channel to base station apparatus 100. At timing 410, base station apparatus 100 receives the call connection request signal. Then, at base station apparatus 100, transmit power determination section 105 detects the call connection request signal demodulated/decoded by demodulation/decoding section 104.

Then, at timing 411, at base station apparatus 100, transmit power determination section 105 determines a transmit power value. The determined transmit power value is output to transmit power control section 106 and transmission frame composition section 111. Then, transmission frame composition section 111 superimposes the transmit power value and known reference data over the control data and thereby composes a transmission frame. This transmission frame is encoded/modulated by coding/modulation section 112, controlled to certain transmit power and a certain transmission rate by transmission RF section 107 and sent through duplexer 102 and antenna 101 to mobile station apparatus 200 via a control channel.

Then, at timing 402, mobile station apparatus 200 receives the control signal. SIR measurement section 207 at mobile station apparatus 200 detects a known reference signal from the control signal converted to an intermediate frequency or baseband frequency by reception RF section 203. Furthermore, transmit power control section 205 detects a transmit power value from the control signal demodulated/decoded by demodulation/decoding section 204.

Then, at timing 403, at mobile station apparatus 200, SIR measurement section 207 measures the SIR of the known reference signal to estimate the propagation path loss of the downlink channel and outputs the measured SIR value of the downlink channel to transmission frame composition section 209. Transmission frame composition section 209 then superimposes the SIR value of the downlink channel and known reference data over the control data and thereby composes a transmission frame. This transmission frame is encoded/modulated by coding/modulation section 210, controlled to certain transmit power and a certain transmission rate by transmission RF section 206 and sent through duplexer 202 and antenna 201 to base station apparatus 100 via a control channel.

Then, at timing 412, base station apparatus 100 receives the control signal. At base station apparatus 100, SIR measurement section 108 detects the known reference signal from the control signal converted to an intermediate frequency or baseband frequency by reception RF section 103 and measures the SIR of the known reference signal to estimate the propagation path loss of the uplink channel. The measured SIR value of the uplink channel is output to transmission rate determination section 109. Transmission rate determination section 109 detects the SIR value of the downlink channel from the control signal demodulated/decoded by demodulation/decoding section 104. Thus, base station apparatus 100 estimates the propagation path loss on the uplink and downlink channels accurately.

Then, at timing 413, transmission rate determination section 109 at base station apparatus 100 determines a transmission rate value from the transmit power value determined at timing 411 and the SIR value of the downlink channel and the SIR value of the uplink channel measured and detected at timing 412 according to the table held by transmission rate determination section 109. The determined transmission rate value is output to transmission rate control section 110 and transmission frame composition section 111. Then, transmission frame composition section 111 superimposes the transmission rate value over the control data and thereby composes a transmission frame. This transmission frame is sent to mobile station apparatus 100 through the same operation as the operation at timing 411 via the control channel.

This embodiment assumes the case where the mobile station apparatus and base station apparatus are applied to an FDD-based communication system, and therefore the transmission rate value is determined using both the SIR value of the downlink channel and the SIR value of the uplink channel. However, in a case where the mobile station apparatus and base station apparatus of this embodiment are applied to a TDD-based communication system, it is also possible to adopt a configuration using either one of the SIR value of the downlink channel or the SIR value of the uplink channel.

Then, at timing 404, mobile station apparatus 200 receives the control signal. Transmission rate control section 208 at mobile station apparatus 200 detects a transmission rate value from the control signal demodulated/decoded by demodulation/decoding section 204. Thus, mobile station apparatus 200 acquires the transmit power value and transmission rate value when user data is transmitted, and therefore mobile station apparatus 200 sends user data according to the acquired transmit power value and transmission rate value from timing 405 onward.

That is, at mobile station apparatus 200, the user data is composed into a transmission frame by transmission frame composition section 209 at the transmission rate controlled by transmission rate control section 208 and output to coding/modulation section 210. The transmission frame coded/modulated by coding/modulation section 210 is amplified by transmission RF section 206 up to a transmit power value controlled by transmit power control section 205 and sent through duplexer 202 and antenna 201.

On the other hand, from timing 414 onward, base station apparatus 100 sends user data through the same operation as the operation of mobile station apparatus 200 from timing 405 onward. That is, at base station apparatus 100, the user data is composed into a transmission frame by transmission frame composition section 111 at the transmission rate controlled by transmission rate control section 110 and output to coding/modulation section 112. The transmission frame coded/modulated by coding/modulation section 112 is amplified by transmission RF section 107 to a transmit power value controlled by transmit power control section 106 and sent through duplexer 102 and antenna 101.

As shown above, a communication between base station apparatus 100 and mobile station apparatus 200 is carried out with the transmit power value and transmission rate value determined at base station apparatus 100.

This embodiment describes the case where mobile station apparatus 200 sends a call, but in the case where mobile station apparatus 200 receives an incoming call, it is also possible to determine transmit power, measure SIRs and determine a transmission rate through the same operation as that described above.

Furthermore, the transmission rate determined in this embodiment is the transmission rate at an upper limit, and therefore it is also possible to carry out communications using a transmission rate equal to or lower than the determined transmission rate.

Furthermore, this embodiment adopts a configuration measuring the SIR of a known reference signal to estimate propagation path loss, but it is also possible to adopt a configuration in which the transmitting side sends the transmit power value to the receiving side and the receiving side compares the transmit power value transmitted with the actual reception power value to estimate propagation path loss. Such a configuration makes it possible to accurately estimate propagation path loss on the channel from the transmitting side to the receiving side.

Furthermore, assuming a case where the mobile station apparatus is in a stationary state and there is no need to adaptively change the transmission rate, this embodiment adopts a configuration in which the transmission rate is determined before communication of user data is started to alleviate the load of processing for determining the transmission rate value and communication of user data is performed using a fixed transmission rate. However, it is also possible to adopt a configuration in which the transmission rate is variable adaptively during communication of user data. That is, it is also possible to adopt a configuration in which base station apparatus 100 and mobile station apparatus 200 measure SIRs at any time even after communication of user data is started, transmission rate determination section 109 of base station apparatus 100 determines the transmission rate with reference to the table every time according to the measured SIR.

Moreover, in this case, it is also possible to adopt a configuration in which the transmission rate is determined based on an average of SIR in an arbitrary period or a variation of SIR in an arbitrary period. Determining the transmission rate based on an average of SIR allows the transmission rate to be determined taking into account the distance characteristic and shadowing characteristic, and determining the transmission rate based on a variation of SIR allows the transmission rate to be determined taking into account the moving direction and moving speed of the mobile station apparatus.

Furthermore, this embodiment adopts a configuration in which the base station apparatus estimates propagation path loss, but it is also possible to adopt a configuration in which the mobile station apparatus estimates propagation path loss.

As shown above, the base station apparatus, mobile station apparatus or radio communication method according to this embodiment determines a transmit power value that will not constitute interference with communications between other stations first, and then determines an upper limit of the transmission rate value based on the determined transmit power value and measured SIR value. That is, when the communication quality deteriorates, the base station apparatus, mobile station apparatus or radio communication method according to this embodiment performs control so that the desired communication quality is satisfied by decreasing the transmission rate while keeping the determined transmit power value constant instead of increasing the transmit power value. And the base station apparatus, mobile station apparatus or radio communication method according to this embodiment determines the transmission rate so that the desired communication quality is satisfied at the determined transmit power value instead of determining the transmit power value according to the transmission rate required by each mobile station. This allows a communication with a transmission rate value that meets the desired communication quality without interfering with communications between other stations.

As described above, the present invention allows a radio communication with a transmission rate that meets the desired communication quality according to propagation path loss taking into account the channel capacity of the entire service area.

This application is based on the Japanese Patent Application No.HEI 11-216314 filed on July 30, 1999, entire content of which is expressly incorporated by reference herein.

### Industrial Applicability

The present invention is applicable to a base station apparatus used in a radio communication system or a communication terminal apparatus such as a mobile station apparatus that carries out a radio communication with this base station apparatus.

## Claims

1. A radio communication apparatus comprising:
a transmit power determiner for determining a transmit power value that will not interfere with communications between other stations based on a transmit power value obtained from the communications between the other stations;
an estimator for estimating propagation path loss of a communication channel based on propagation path loss information; and
a transmission rate determiner for determining a transmission rate value that will meet desired communication quality according to the determined transmit power value and the estimated propagation path loss.

2. A radio communication apparatus comprising:
a receiver for receiving a transmit power value and a transmission rate value determined by the other end of communication; and
a transmitter for transmitting user data with the transmit power value and the transmission rate value.

3. The radio communication apparatus according to claim 1, wherein the estimator estimates the propagation path loss, as the propagation path loss information, using a value indicating the reception quality of a known reference signal sent back from the other end of communication in response to the known reference signal transmitted from the radio communication apparatus.

4. The radio communication apparatus according to claim 1, wherein the estimator estimates the propagation path loss, as the propagation path loss information, using the reception power value and the transmit power value sent from the other end of communication.

5. The radio communication apparatus according to claim 1, wherein the estimator estimates the propagation path loss based on the propagation path loss information acquired a plurality of times during a predetermined time.

6. The radio communication apparatus according to claim 1, wherein the transmission rate determiner has a table of correspondence between determined transmit power values, estimated propagation path loss and transmission rate values and determines the transmission rate value with reference to the table of correspondence.

7. The radio communication apparatus according to claim 1, further comprising a transmitter for transmitting the determined transmit power value and the determined transmission rate value as a control signal and transmitting user data with the determined transmit power value and the determined transmission rate value.

8. A base station apparatus equipped with a radio communication apparatus, the radio communication apparatus comprising:
a transmit power determiner for determining a transmit power value that will not interfere with communications between other stations based on a transmit power value obtained from the communications between the other stations;
an estimator for estimating propagation path loss of a communication channel based on propagation path loss information; and
a transmission rate determiner for determining a transmission rate value that will meet desired communication quality according to the determined transmit power value and the estimated propagation path loss.

9. A base station apparatus equipped with a radio communication apparatus, the radio communication apparatus comprising:
a receiver for receiving a transmit power value and a transmission rate value determined by the other end of communication; and
a transmitter for transmitting user data with the transmit power value and the transmission rate value.

10. A communication terminal apparatus equipped with a radio communication apparatus, the communication terminal apparatus comprising:
a transmit power determiner for determining a transmit power value that will not interfere with communications between other stations based on a transmit power value obtained from the communications between the other stations;
an estimator for estimating propagation path loss of a communication channel based on propagation path loss information; and
a transmission rate determiner for determining a transmission rate value that will meet desired communication quality according to the determined transmit power value and the estimated propagation path loss.

11. A communication terminal apparatus equipped with a radio communication apparatus, the communication terminal apparatus comprising:
a receiver for receiving a transmit power value and a transmission rate value determined by the other end of communication; and
a transmitter for transmitting user data with the transmit power value and the transmission rate value.

12. A radio communication method, wherein one radio communication apparatus determines a transmit power value that will not interfere with communications between other stations based on a transmit power value obtained from the communications between the other stations, estimates propagation path loss of a communication channel, determines a transmission rate value that will meet desired communication quality according to the determined transmit power value and the estimated propagation path loss, sends the determined transmit power value and the determined transmission rate value as a control signal and sends user data with the determined transmit power value and the determined transmission rate value, and
the other radio communication apparatus sends user data with the transmit power value and the transmission rate value sent from the one radio communication apparatus.

13. The radio communication method according to claim 12, wherein the transmission rate value is determined before the user data is sent and the transmission rate value is not changed until the communication is completed.
